# EUROPÄISCHE PATENTSCHRIFT

(11) **EP 0 693 985 B1**
(45) Veröffentlichungstag und Bekanntmachung des Hinweises auf die Patenterteilung: **05.11.1997**
(21) Anmeldenummer: 94914389.5
(22) Anmeldetag: 16.04.1994
(51) Int. Cl.: B23K 37/04

(54) **VERFAHREN UND VORRICHTUNG ZUM VERSCHWEISSEN EINES ANSCHWEISSTEILS UND EINES BASISTEILS**
PROCESS AND DEVICE FOR WELDING A WELD-ON PART ON A SUPPORTING BOARD
PROCEDE ET DISPOSITIF DE SOUDAGE D'UNE PIECE SUR UN SUPPORT

(30) Priorität: 16.04.1993 DE 4312439
(43) Veröffentlichungstag der Anmeldung: 31.01.1996
(73) Patentinhaber: ILCH, Hartmut, D-76669 Bad Schönborn (DE); CLAUSSEN, Carsten M., D-10787 Berlin (DE)
(72) Erfinder: ILCH, Hartmut, D-76669 Bad Schönborn (DE); CLAUSSEN, Carsten M., D-10787 Berlin (DE)
(74) Vertreter: Dreiss, Fuhlendorf, Steimle & Becker, Patentanwälte
(86) Internationale Anmeldenummer: EP9401185
(87) Internationale Veröffentlichungsnummer: WO9423889

(56) Entgegenhaltungen:
- EP-A- 0 291 292
- DE-A- 3 434 746
- DE-A- 3 519 696
- GB-A- 2 254 171

## Beschreibung

Die Erfindung betrifft eine Vorrichtung und ein Verfahren gemäß dem Oberbegriff des Anspruchs 1 bzw. 7.

Eine derartige Vorrichtung und ein derartiges Verfahren ist aus der DE-PS 35 19 696 A1 bekannt. Dort werden ebene Platten in einem Winkel zueinander verschweißt. Im wesentlichen ist hier nur eine Geradführung der Schweißelektrode erforderlich. Runde oder räumliche Schweißnähte können mit dieser bekannten Vorrichtung nicht hergestellt werden. Die Elektrode selbst ist um die Hauptbewegungsrichtung nur sehr begrenzt schwenkbar.

Eine weitere ähnliche Vorrichtung und ein entsprechendes Verfahren ist aus der DE-PS 34 34 746 bekannt. Hierbei ist vorgesehen, daß eine an einem Werkzeugarm des Handhabungsgeräts angebrachte Haltevorrichtung ein in einem Teilemagazin bereitgehaltenes Anschweißteil ergreift, welches auf seiner dem Basisteil zugewandten Seite mit Buckeln oder Spitzen zur örtlich begrenzten Stromübertragung auf das Basisteil versehen ist. Dieses Anschweißteil wird dann vom Handhabungsgerät an der vorprogrammierten Anschweißstelle auf dem Basisteil positioniert. Anschließend wird das Anschweißteil mittels einer Elektrode, die in der im Werkzeugarm des Handhabungsgeräts angeordneten Haltevorrichtung vorgesehenen ist, unter Strom gesetzt, so daß an den Berührungsstellen zwischen dem Anschweißteil und dem Grundwerkstück zur Fixierung des Anschweißteils ausreichende Verschmelzungen auftreten. Nach der Fixierung des Anschweißteils am Basisteil wird die Haltevorrichtung in einem Werkzeugmagazin abgelegt und an ihrer Stelle wird eine Schweißpistole aufgenommen, mit der der diesem Heftschweißen nachfolgende Ausschweißvorgang programmgesteuert durchgeführt wird.

Das bei dem bekannten verfahren und der bekannten Vorrichtung verwendete Lichtbogen-Bolzenschweiß-Verfahren besitzt eine Reihe von Nachteilen: Zum einen ist die Lage des Heftschweißpunktes von der Geometrie der beiden zu verbindenden Teile abhängig: Um den zur Verschweißung erforderlichen Lichtbogen auszubilden, ist es - wie bereits oben beschrieben wurde - vor allem bei größeren Flächen unabdingbar erforderlich, daß das Anschweißteil Vorsprünge wie z.B. Buckeln oder Spitzen an seiner dem Basisteil zugewandten Seite aufweist. Die Ausbildung derartiger Zündspitzen besitzt dabei einen entscheidenden Einfluß auf das zu erzielende Schweißergebnis, so daß die Anwendbarkeit des bekannten Verfahrens und der bekannten Vorrichtung in nachteiliger Art und Weise von Anfang an auf derartige, Zündspitzen aufweisende Anschweißteile beschränkt ist. Außerdem besitzt dieses Spitzenzündungsverfahren den Nachteil, daß die damit ausführbaren Schweißungen zum Teil nur ungleichmäßig und nicht über die gesamte Fläche des Anschweißteils durchführbar sind. Außerdem ist ein Verschweißen von Werkstücken mit großen Berührflächen oder mit einem großen Gewicht nicht möglich.

Die bekannte Vorrichtung erlaubt es außerdem, das Anschweißteil und das Basisteil mittels des sogenannten Hubzündungsverfahrens zu verschweißen. Hierbei ist vorgesehen, daß nach dem Aufsetzen des Anschweißteils auf das Basisteil ersteres vom letztgenannten abgehoben wird und bei gleichzeitiger Einschaltung eines Schweißstroms ein Lichtbogen gezündet wird. In der obersten Hubstellung wird dann der maximale Schweißstrom aufgebracht, und die beiden Schweißteile werden durch den Lichtbogen lokal erschmolzen. Nach einem einstellbaren Zeitraum im Millisekundenbereich wird das Anschweißteil von der Haltevorrichtung losgelassen und taucht in das Schmelzbad auf dem Basisteil ein, womit die Heftschweißung durchgeführt ist. Ein derartiges Hubschweißverfahren besitzt den Nachteil, daß die Hubrichtung stets in Richtung der Schwerkraft erfolgen muß, um das durch die Gravitationskraft bewirkte Eintauchen des Anschweißteils in das Schmelzbad auf dem Basisteil durchführen zu können. Da somit ein Schweißen in einer beliebigen räumlichen Orientierung nicht möglich ist, ist bei der bekannten Vorrichtung vorgesehen, daß das Basisteil in eine geeignete Position gebracht wird. Eine derartige Vorgangsweise ist bei großen Basisteilen schwierig durchzuführen und begrenzt außerdem in nachteiliger Art und Weise die Geometrie der Basisteile, die mit dem bekannten Verfahren und der bekannten Vorrichtung verschweißbar sind.

Ein weiterer Nachteil des bekannten Verfahrens und der bekannten Vorrichtung ist, daß nach der Durchführung des Heftschweißgangs die das Anschweißteil greifende Haltevorrichtung in einem Werkzeugmagazin abgelegt und zur Durchführung des Anschweißvorgangs eine Schweißpistole in den Werkzeugarm des Handhabungsgeräts aufgenommen werden muß. Dieser zusätzliche Verfahrensschritt ist zeitaufwendig und verringert daher in nachteiliger Art und Weise die mit dem bekannten Verfahren und der nach diesem Verfahren arbeitenden Vorrichtung erzielbare Taktrate.

Aus der DE-OS 39 10 495 ist eine Schweißvorrichtung zur Herstellung einer Schweißverbindung zwischen einer Radfelge und einer Radschüssel einer Autofelge bekannt, die mit Hilfe von Schweißköpfen an einzelnen Teilstücken automatisch miteinander an den sogenannten Lappen verschweißt werden, indem wahlweise vier oder fünf Schweißköpfe gleichmäßig auf den Umfang verteilt gleichzeitig zur Ausführung kommen. Bei dieser bekannten Schweißvorrichtung ist vorgesehen, daß auf ein ortsfestes, höhenverstellbares und um eine senkrechte Zentralachse der Vorrichtung drehbares Unterwerkzeug die Radschüssel und der Felgenring bereits ausgerichtet aufgelegt und durch ein Ausfahren gegen ein Oberwerkzeug zur Herstellung der Schweißverbindung lagefixiert gehalten wird. Über der durch das Unterwerkzeug und das Oberwerkzeug gebildeten Fixiervorrichtung für die Autofelge ist eine um die Zentralsäule der Vorrichtung drehbare Schweißeinrichtung vorgesehen, die vier oder fünf Schweißköpfe zur Herstellung von vier oder fünf Schweißnähten pro Felgenumfang aufweist. Die Schweißköpfe werden von zwei unterschiedlichen Kulissen in Form von Verstellscheiben gesteuert und von Steuerrollen dirigiert, so daß verschiedene Felgendurchmesser geschweißt werden können.

Die bekannte Vorrichtung ist in nachteiliger Art und Weise auf das Verschweißen einer Radfelge und einer Radschüssel einer Autofelge mittels von in einer Ebene liegenden und eine kreisförmige Gestalt aufweisenden Schweißnähten beschränkt, wobei die zu verschweißenden Teile außerdem noch vor dem Schweißen kraftschlüssig aneinander gehalten werden müssen. Eine Übertragung der aus der o.g. Offenlegungsschrift bekannten Vorgangsweise auf eine Vorrichtung zum Verschweißen eines Anschweißteils mit einem Basisteil, bei dem das Anschweißteil von einer Halteeinrichtung des Handhabungsgeräts gegriffen und dann auf dem Basisteil positioniert wird, ist aufgrund der bei den beiden verschiedenen Vorrichtungen auftretenden Anforderungen und Randbedingungen prinzipiell nicht möglich. Aus der EP 0 528 321 A1 ist eine Vorrichtung zum Einsetzen und Einschweißen von flachen Formteilen in Ausnehmungen von Platinen bekannt, bei der ein Drehtisch vorgesehen ist, der in Karusellbauart vier gleichartige Spanntische aufweist. In einer ersten Arbeitsstation wird eine Platine mittels einer Transportvorrichtung oder von Hand auf den Spanntisch aufgelegt und mit ihrer Ausnehmung über den mittigen Teil des Spanntisches vorjustiert abgelegt. Durch entsprechende Halteelemente wird dann die Platine auf dem Spanntisch fixiert und der Drehtisch wird gedreht, bis der die Platine tragende Spanntisch eine Zentrierstation erreicht. In dieser Station befindet sich über den Spanntisch eine kombinierte Zentriervorrichtung für die Platine und für ein in die Ausnehmung der Platine einzusetzendes Formteil. Nach dem Zentrieren der Platine auf dem Spanntisch und dem Einsetzen des Formteils in die Ausnehmung der Platine wird der Spanntisch vom Drehtisch unter eine Schweißstation verfahren, die eine über dem Spanntisch angeordnete, gegen die Platine und den Formteil absenkbare Klemmvorrichtung aufweist, mit der die Platine und das Formteil festgeklemmt werden können, wobei die Klemmvorrichtung eine frei drehbar gelagerte Klemmbacke für das Formteil und eine frei drehbar gelagerte ringförmige Klemmbacke für die Platine aufweist. Diese Klemmbacken lassen zwischen sich einen Ringspalt frei, indem die Fuge zwischen der Platine und dem Formteil liegt. Auf diese Fuge ist eine Schweißeinrichtung gerichtet, die eine dreidimensionale Verstellung ihres Schweißelements erlaubt. Durch eine Vorbeibewegung der Platine in Verbindung mit einer entsprechenden Bewegung des Schweißelements in der Fuge kann eine die Platine und das Formteil verbindende Schweißnaht hergestellt werden.

Auch diese Vorrichtung ist in ihrer Einsetzbarkeit stark eingeschränkt und erlaubt nur die Schweißverbindung zweier Schweißteile durch eine in eine Ebene liegende Schweißnaht. Eine Anwendung des aus der o.g. europäischen Patentanmeldung bekannten Vorgehensprinzips auf eine Vorrichtung, bei der mittels eines Handhabungsgeräts ein Anschweißteil an einer definierten Stelle auf einem Basisschweißteil positioniert werden kann, ist hier ebenfalls aufgrund der unterschiedlichen Ausgangsvoraussetzungen und Randbedingungen, welche bei diesen miteinander nicht vergleichbaren Vorrichtungen auftreten, nicht möglich.

Zur Vermeidung dieser Nachteile sieht die Erfindung die Aufgabe, ein Verfahren und eine Vorrichtung der eingangs genannten Art derart weiterzubilden, daß eine universellere und flexiblere Einsetzbarkeit gewährleistet ist.

Diese Aufgabe wird durch eine Vorrichtung der eingangs genannten Art dadurch gelöst, daß an dem Träger durch ein zweites Antriebsmittel ein Ausleger in der zweiten Richtung verschiebbar ist, und daß an dem Ausleger das Schweißelement angeordnet ist, das durch ein drittes Antriebsmittel in der dritten Richtung verschiebbar und weiter das Schweißelement um eine im wesentlichen zur dritten Bewegungsrichtung parallele Achse drehbar ist.

Es ist durch die Positionierbarkeit des Schweißelements relativ zum Anschweißstück bei der erfindungsgemäßen Vorrichtung möglich, beliebig geformte Anschweißteile zu verschweißen, so daß die Vorrichtung in vorteilhafter Art und Weise flexibler und universeller einsetzbar ist.

Das erfindungsgemäße Verfahren zum Heftschweißen eines Anschweißteils mit einem Basisteil, bei dem das Anschweißteil durch ein eine Halteeinrichtung aufweisendes Handhabungsgerät an einer definierten Anschweißstelle des Basisteils positioniert und heftverschweißt wird, wobei zum Heftverschweißen eine mit dem Handhabungsgerät zusammenwirkende Schweißeinrichtung verwendet wird, deren Schweißelement durch eine Positioniereinrichtung in mindestens einer Richtung relativ zum Anschweißteil verstellt wird, wobei die Haltevorrichtung das Anschweißteil wahrend des Heftschweißens hält und das Schweißelement der Schweißeinrichtung durch Positionierelemente der Positioniereinrichtung am Anschweißteil geführt wird, wobei ohne Lageverdänderung des Anschweißteils dieses an mehreren Seiten heftverschweißt wird, indem die Positioniereinrichtung um einen Winkel θ um die Achse des Anschweißteils gedreht wird.

Durch diese erfindungsgemäße Maßnahmen wird ein Verfahren geschaffen, welches sich gegenüber dem bekannten Verfahren in vorteilhafter Art und Weise für eine flexiblere und universellere Einsatzbarkeit auszeichnet.

Weitere vorteilhafte Weiterbildungen der Erfindung sind in den Unteransprüchen definiert.

Weitere Einzelheiten der Erfindung sind dem Ausführungsbeispiel zu entnehmen, welche im folgenden anhand der Figuren beschrieben wird. Es zeigen:
- Figur 1: ein Ausführungsbeispiel der Vorrichtung;
- Fig. 2 und 3: eine Darstellung einer Schweißeinrichtung des Ausführungsbeispiels.

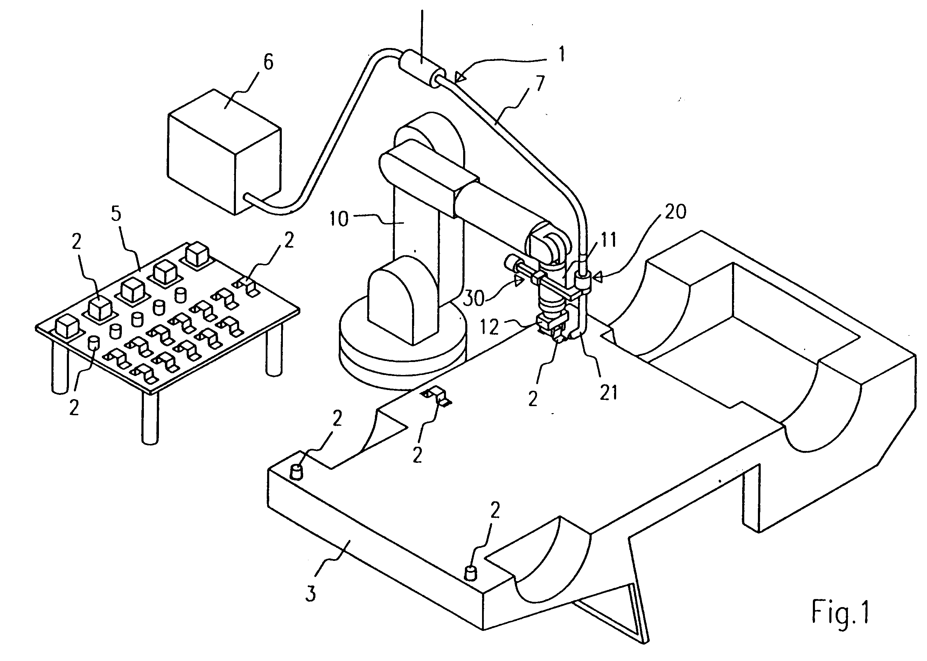

Das in Figur 1 dargestellte Ausführungsbeispiel einer Vorrichtung 1 zum Verschweißen eines Anschweißteils 2 mit einem Basisteil 3 weist einen als Handhabungseinrichtung fungierenden sechsachsigen Knickarm-Roboter 10 auf, an dessen Werkzeugarm 11 eine Greifereinrichtung 12 angeordnet ist. In einem Anschweißteile-Magazin 5 sind mehrere Anschweißteile 2 unterschiedlicher Geometrie aufgenommen, welche von der Greifereinrichtung 12 des Roboters 10 aufnehmbar und auf dem Basisteil 3 definiert positionierbar sind.

Wichtig ist nun, daß die Vorrichtung 1 eine allgemein mit 20 bezeichnete Schweißeinrichtung aufweist, die im wesentlichen aus einem Schweißelement 21 und einer das Schweißelement 21 relativ zum Anschweißteil 2 bewegenden Positioniereinrichtung 30 besteht. Diese vorzugsweise drei zusätzlich angetriebene und gesteuerte Achsen ausbildende Positioniereinrichtung 30 der Schweißeinrichtung 20 erlaubt es in vorteilhafter Art und Weise, das Schweißelement 21, welches über ein an einem beweglichen Balken aufgehängtes Schlauchpaket 7 mit einer Schweißstromquelle 6 verbunden ist, an und um das Anschweißteil 2 zu führen, um an vordefinierbaren Stellen das Anschweißteil 2 gegenüber dem Basisteil 3 durch eine Heftschweißung lagezufixieren.

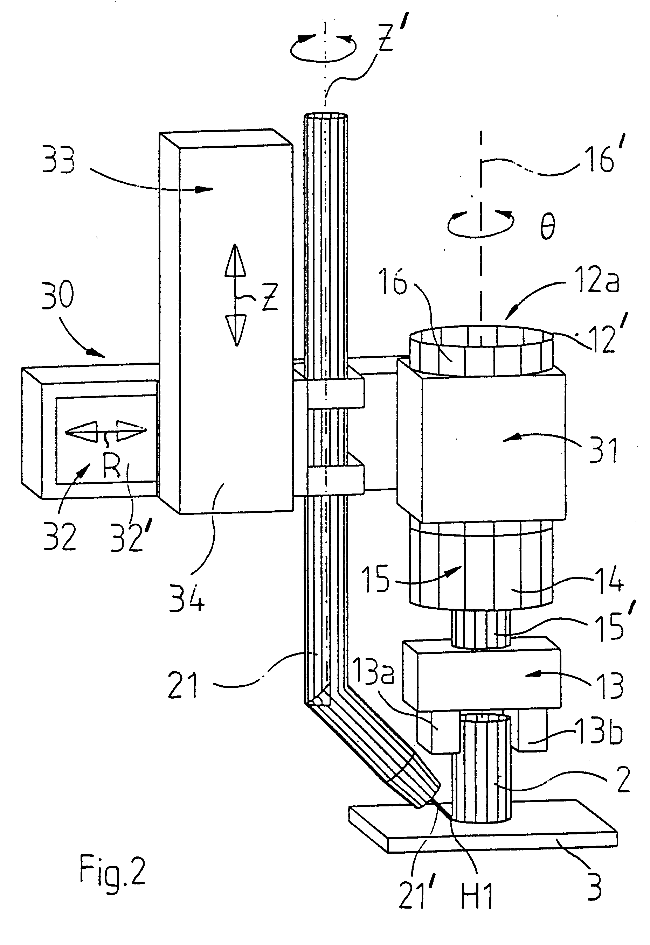

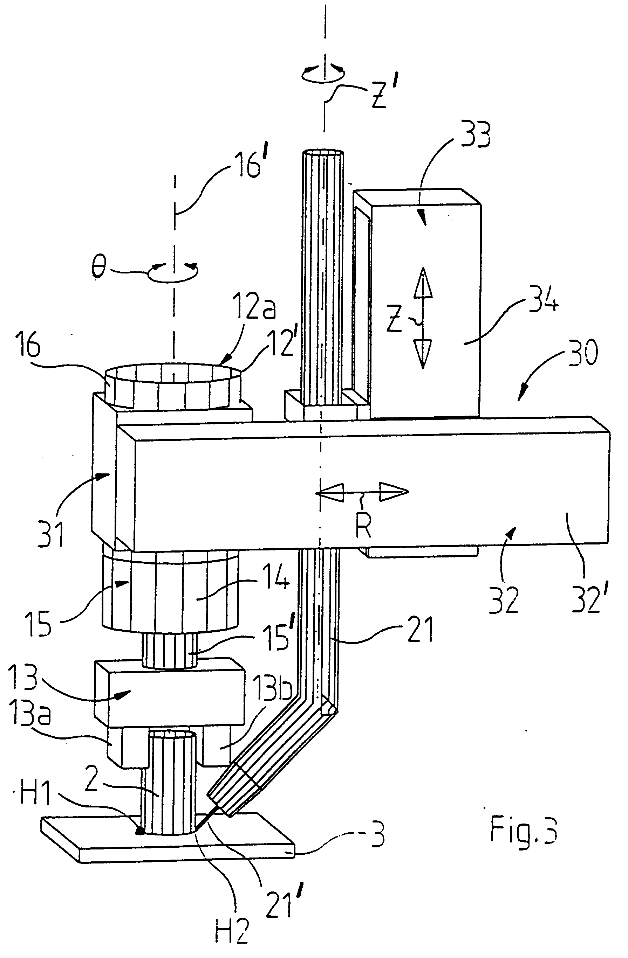

In den Figuren 2 und 3 ist nun die Greifereinrichtung 12 zusammen mit der vorzugsweise nach dem MAG-Verfahren arbeitenden Schweißeinrichtung 20 dargestellt. Die Greifereinrichtung 12 weist an ihrem oberen Ende 12' eine an sich bekannte und daher nicht näher dargestellte Kupplungseinrichtung 12a auf, die mit dem in den Figuren 2 und 3 nicht dargestellten Werkzeugarm 11 des sechsachsigen Knickarm-Roboters 10 zusammenwirkt, so daß die Greifereinrichtung 12 zusammen mit der Schweißeinrichtung 20 am Werkzeugarm 11 auswechselbar arretierbar ist. Hierdurch ist es besonders einfach möglich, bereits vorhandene Handhabungsgeräte mit der beschriebenen Schweißeinrichtung 20 nachzurüsten. Die vom Werkzeugarm 11 des sechsarmigen Knickarm-Roboters 10 um eine vertikal verlaufende Achse (siehe Fig. 1) schwenkbare Greifereinrichtung 12 besitzt an ihrem dem Werkzeugarm 11 abgewandten Ende ein zwei Greiferbacken 13a, 13b aufweisendes Greiferelement 13 zur Aufnahme der Anschweißteile 2. Ein derartiges Greiferelement 13 ist an sich bekannt, so daß eine nähere Beschreibung dieses Elements an dieser Stelle nicht erforderlich ist. Es soll lediglich darauf hingewiesen werden, daß vorzugsweise Greiferelemente 13 eingesetzt werden, die eine relativ große Greiferöffnung ausbilden, so daß viele verschiedene Anschweißteile 2 direkt hintereinander und ohne einen Wechsel der Greiferelemente 13 gegriffen und zur Heftschweißung auf dem Basisteil 3 positioniert werden können.

Über dem Greiferelement 13 ist ein zylinderförmiges Gehäuse 14 angeordnet, in dessen Inneren eine Hubvorrichtung 15 aufgenommen ist, von der in den Fig. 2 und 3 nur ein am Greiferelement 13 ansetzender Hubkolben 15' zu sehen ist. Das Hubwerk 15 weist ein Wegmeßsystem mit einem parallel zum Hubkolben 15' angeordneten induktiven Wegaufnehmer auf, so daß die Hubbewegung des Greiferelements 13 exakt erfaßbar ist. Das Gehäuse 14 ist über eine in den Figuren nicht dargestellte weitere Kupplungseinrichtung mit einem weiteren Gehäuse 16 der Greifereinrichtung 12 verbunden, so daß das Greiferelement 13 zusammen mit der im Gehäuse 14 aufgenommenen Hubvorrichtung 15 vom weiteren Gehäuse 16 trennbar und somit in einer Greiferablage ablegbar ist.

Dieses weitere Gehäuse 16 der Greifereinrichtung 12 dient nun als Drehachse für ein erstes Positionierelement 31 der Positioniereinrichtung 30 der Schweißeinrichtung 20, derart, daß die Schweißeinrichtung 20 um eine Hauptachse 16' der Greifereinrichtung 12, zu der das im wesentlichen zylinderförmige weitere Gehäuse 16 der Greifereinrichtung 12 koaxial verläuft, drehbar ist. Das erste Positionierelement 31 der Schweißeinrichtung 20 bildet somit eine erste angetriebene Achse aus, die über eine entsprechende, in den Figuren nicht gezeigte Steuereinheit der Positioniereinrichtung 30 steuerbar ist. Der dadurch geschaffene Rotationsfreiheitsgrad ermöglicht es also, daß das Schweißelement 21 der Schweißeinrichtung 20 um das im Greiferelement 13 aufgenommene Anschweißteil 2 in einer ersten Bewegungsrichtung θ über einen definierten Winkelbereich, vorzugsweise über 360°, zu bewegen.

Ein zweiter Freiheitsgrad des Schweißelements 21 der Schweißeinrichtung 20 wird dadurch ausgebildet, daß dieses durch ein zweites Positionierelement 32 in einer radialen Richtung R bezüglich der Hauptachse 16' der Greifereinrichtung 13 verschiebbar ist. Ein dritter Freiheitsgrad des Schweißelements 21 der Schweißeinrichtung 20 wird derart realisiert, daß die Positioniereinrichtung 30 der Schweißeinrichtung 20 ein drittes Positionierelement 33 aufweist, durch das eine Verschiebebewegung des Schweißelements 21 in einer zu den beiden Bewegungsrichtung θ und R orthogonal verlaufenden dritten Bewegungsrichtung Z ermöglicht.

Desweiteren ist es möglich, einen vierten Freiheitsgrad des Schweißelements 21 auszubilden, indem vorgesehen wird, daß das Schweißelement 21 um eine parallel zur dritten Bewegungsrichtung Z verlaufenden Achse Z' drehbar ist. Dieser vierte Freiheitsgrad des Schweißelements 21 ermöglicht es in vorteilhafter Art und Weise, daß dieses in einer in Bezug auf die herzustellende Schweißnaht optimierten Position relativ zum Anschweißteil 2 positioniert werden kann.

Die konstruktive Ausbildung der drei Positionierelemente 31-33 der Positioniereinrichtung 30 der Schweißeinrichtung 20 ist dabei dergestalt, daß die Positioniereinrichtung 30 einen sich in die zweite Bewegungsrichtung R erstreckenden Träger 32' aufweist, der durch ein in den Figuren nicht näher dargestelltes Antriebsmittel um das weitere Gehäuse 16 und somit um die Hauptachse 16' der Greifereinrichtung 12 drehbar ist. An diesem Träger 32' ist durch ein ebenfalls nicht gezeigtes zweites Antriebsmittel ein Ausleger 34 verschiebbar, an dem das Schweißelement 21 angeordnet ist. Dieses Schweißelement 21 ist durch ein drittes Antriebsmittel in der dritten Bewegungsrichtung Z verschiebbar. Die beschriebene konstruktive Ausbildung der drei Positionierelemente 31-33 besitzt hierbei den Vorteil, daß sie eine besonders leichte Bauweise erlaubt. Dies ist insbesondere deshalb von Bedeutung, da die Positioniereinrichtung 30 der Schweißeinrichtung 20 vom Knickarm-Roboter 10 getragen wird. Die Traglast derartiger Handhabungsgeräte ist im allgemeinen begrenzt, so daß durch die leichte Ausführung der Positioniereinrichtung 30 die vom Knickarm-Roboter 10 handhabbare Nutzlast nur unwesentlich eingeschränkt wird. Desweiteren besitzt die beschriebene Ausgestaltung der Positioniereinrichtung 30 den Vorteil, daß sie einen modularen Aufbau erlaubt. In vorteilhafter Art und Weise ist es daher möglich, die einzelnen Positioniereinrichtungen 31-33 besonders einfach auf unterschiedliche Geometrien und Gewichtsklassen der zu verarbeitenden Werkstücke anzupassen.

Das Verfahren zum Verschweißen eines Anschweißteils 2 mit einem Basisteil 3 läuft nun wie folgt ab:

Der sechsarmige Knickarm-Roboter 10 bewegt das Greiferelement 13 der Greifereinrichtung 12 zum Anschweißteile-Magazin 5. Das zu verschweißende Anschweißteil 2 wird gegriffen und vom Roboter 10 über der vorgesehenen Position auf dem Basisteil 3 positioniert. Nachdem das Anschweißteil 2 in diese vordefinierte Position gebracht wurde, verharrt der Roboter 10 bis zum Ende des diesem Positionierschritt folgenden Verfahrensschrittes der Heftverschweißung in dieser definierten Stellung. Diese vordefinierte Position ist dabei derart gewählt, daß es unter Berücksichtigung der Herstellungs- und/oder der Lagetoleranzen der beiden zu verschweißenden Teile 2, 3 zu keiner Kollision zwischen dem Anschweißteil 2 und dem Basisteil 3 kommen kann.

Dann setzt die Hubvorrichtung 15 der Greifereinrichtung 12 das Anschweißstück 2 auf das Basisteil 3 auf, wobei das in die Hubvorrichtung 15 integriertes Wegmeßsystem den zurückgelegten Hubweg des Greiferelements 13 mißt. Diese Erfassung des Hubweges ermöglicht in vorteilhafter Art und Weise eine Erkennung der individuellen Herstellungs- und/oder Lagetoleranzen der beiden zu verschweißenden Teile, so daß auch bei derartigen Toleranzen bei dem dem Positioniervorgang folgenden Heftvorgang eine exakte Positionierung des Schweißelements 21 am vorgesehenen Heftschweißpunkt besonders einfach möglich ist.

Die beschriebene zweistufige Positionierung des Anschweißteils 2 auf dem Basisteil 3 besitzt den Vorteil, daß die Vorpositionierung des Anschweißteils 2 vom Roboter 10 besonders rasch durchgeführt werden kann, da bei dieser Grobpositionierung keine Kollisionsgefahr gegeben ist. Die daran anschließende Feinpositionierung kann dann ebenfalls besonders rasch und genau vom Hubwerk 15 der Greifereinrichtung 12 durchgeführt werden.

Daran anschließend positioniert die über die Steuereinrichtung der Positioniereinrichtung 30 vorzugsweise CNC-gesteuerter dritte Positioniereinheit 33 der Schweißeinrichtung 20 eine Schweißdrahtspitze 21' des Schweißelements 21 in eine vordefinierte Ausgangsstellung, beispielsweise ca. 10 mm über dem Basisteil 3. Danach wird die Schweißdrahtspitze 21' - zwecks Toleranzausgleich unter Berücksichtigung des gemessenen Hubweges des Greiferelements 13 - durch die dritte Positioniereinheit 33 und die ebenfalls vorzugsweise CNC-gesteuerte zweite Positioniereinheit 32 der Positioniereinheit 30 der Schweißeinrichtung 20 in die in Fig. 2 dargestellte erste Heftschweißposition gebracht. Nachdem ein erster Heftschweißpunkt H1 gesetzt wurde, wird das Schweißelement 21 und somit die Schweißdrahtspitze 21' aus der ersten Heftposition weg und in Richtung des zweiten Heftschweißpunktes H1 bewegt. Hierzu ist vorgesehen, daß die zweite Positioniereinheit 32 das Schweißelement 21 in radialer Richtung R und evtl. die dritte Positioniereinheit 33 in vertikaler Richtung Z derart weit wegbewegt, daß das Schweißelement 20 ungehindert durch die vorzugsweise CNC-gesteuerte erste Positoniereinheit 31 der Schweißeinrichtung 20 in der Bewegungsrichtung θ zu einem zweiten Heftschweißpunkt H2 (s. Fig. 3) gedreht werden kann. Die Herstellung des zweiten und evtl. weiterer Heftschweißpunkte erfolgt nun wie oben beschrieben.
Nachdem die entsprechende Zahl von Heftschweißpunkten gesetzt wurde, zieht das im Gehäuse 14 der Greifereinrichtung 12 integrierte Hubwerk 15 bei geschlossenem Greiferelement 13 mit einer einstellbaren Prüfkraft am heftverschweißten Anschweißteil 2. Gleichzeitig hierzu überprüft die Greifersteuerung den elektrischen Kontakt zwischen Anschweißteil 2 und Basisteil 3 sowie die Signale des Wegmeßsystems des Hubwerks 15 dahingehend, ob durch die auf das Anschweißteil 2 aufgebrachte Prüfkraft eine Lageveränderung auftritt, die eine nur unzureichende Verheftung des Anschweißteils 2 mit dem Basisteil 3 charakterisiert. Durch diese Kontrolle ist gewährleistet, daß das Anschweißteil 2 hinreichend am Basisteil 3 heftverschweißt ist, womit in vorteilhafter Art und Weise eine hundertprozentige Qualitätssicherung gewährleistet ist.

Nach dem erfolgreichen Abschluß dieser Zugprüfung erfolgt als nächster Verfahrensschritt das Ausschweißen des Anschweißteils 2. Hierzu kann, wenn die Geometrie des Greiferelements 13 und/oder der Greifereinrichtung 12 keine Störkontur für den Ausschweißvorgang darstellt, vorgesehen sein, daß sofort nach der zur Lagefixierung des Anschweißteils 2 auf dem Basisteil 3 durchgeführten Heftschweißung der Ausschweißvorgang durchgeführt wird, ohne daß Greiferelement 13 zu öffnen. Dieser Fall tritt insbesondere bei rotationssymmetrischen Anschweißteilen 2 auf, die mit ihren Stirnflächen auf einer horizontalen, ebenen Fläche aufgesetzt sind. Zur Durchführung dieses Ausschweißvorganges ist nun vorgesehen, daß das Schweißelement 20 durch die drei Positioniereinheiten 31-33 der Positioniereinrichtung 30 der Schweißeinrichtung 20 um und an das Anschweißteil 2 geführt werden.

Der optional vorgesehene vierte Freiheitsgrad des Schweißelements 21 ermöglicht es nun in vorteilhafter Art und Weise, beim Ausschweißen von nichtrotationssymmetrischen Anschweißteilen 2 die Schweißdrahtspitze 21' des Schweißelements 21 in eine zum Ausschweißen optimierte Position in Bezug auf das Anschweißteil 2 zu bewegen, so daß in vorteilhafter Art und Weise gewährleistet ist, daß auch bei einer nicht konzentrisch zur dritten Bewegungsrichtung Z verlaufenden Schweißnaht eine den gestellten Anforderungen an das Ausschweißen genügende Schweißqualität gegeben ist.

Ein Heft- und/oder Ausschweißen des geklemmten Anschweißteils 2 ist insbesondere dann von Vorteil, wenn das Anschweißteil 2 nur einseitig geheftet oder geschweißt werden soll. Die Fixierung des Anschweißteils 2 durch die Greifereinrichtung 13 verhindert dann, daß sich das Anschweißteil 2 aufgrund des Wärmeverzugs auf die Seite der Heft- oder Ausschweißung bewegt oder kippt.

Falls die Geometrie des Greifelements 13 beim Ausschweißvorgang eine Störkontur darstellt, so daß das Anschweißteil 2 nicht unmittelbar nach der Heftverschweißung ausgeschweißt werden kann, ist vorgesehen, daß die Greiferbacken 13a, 13b des Greiferelements 13 geöffnet werden, die Greifereinheit 12 vom Anschweißteil 2 wegbewegt und vorzugsweise in einer Greiferablage der Vorrichtung 1 automatisch abgelegt wird. Danach wird das vorzugsweise als Schweißpistole ausgebildete Schweißelement 21 in den sogenannten Tool-Center-Point gefahren und dort fixiert. Diese Fixierung auf den Tool-Center-Point, also auf denjenigen Punkt, auf den die Steuerung des Knickarm-Roboters 10 ausgerichtet ist, erlaubt es in vorteilhafter Art und Weise, daß das Schweißelement 21 dann wie eine herkömmliche Roboter-Schweißpistole zum Ausschweißen des Anschweißteils 2 verwendet werden kann.

## Patentansprüche

1. Vorrichtung zum Verschweißen eines Anschweißteils (2) mit einem Basisteil (3), die ein Handhabungsgerät (10) mit einer von einem Werkzeugarm (11) des Handhabungsgeräts (10) geführten Halteeinrichtung (12) zum Greifen und zur Positionierung des Anschweißteils (2) an einer festlegbaren Anschweißstelle des Basisteils (3) aufweist, wobei die Vorrichtung (1) eine am Werkzeugarm (11) des Handhabungsgeräts (10) angeordnete Schweißeinrichtung (20) aufweist, deren Schweißelement (21) durch eine Positioniereinrichtung (30;31-33) in drei Richtungen (R,θ,Z) relativ zur Halteeinrichtung (12) verstellbar ist, wobei das Schweißelement (21) der Schweißeinrichtung (20) durch eine erste Positioniereinheit (31) der Positioniereinrichtung (30) in einer konzentrisch zur Hauptachse (16') der Halteeinrichtung (12) verlaufenden ersten Richtung (θ) bewegbar ist, und/oder das Schweißelement (21) der Schweißeinrichtung (20) durch eine zweite Positioniereinheit (32) der Positioniereinrichtung (30) in einer im wesentlichen radial zur Hauptachse (16') der Halteeinrichtung (12) verlaufenden zweiten Richtung (R) bewegbar ist, und/oder das Schweißelement (21) der Schweißeinrichtung (20) durch eine dritte Positioniereinheit (33) der Positioniereinrichtung (30) in einer im wesentlichen orthogonal zur ersten (θ) und zur zweiten Richtung (R) verlaufenden dritten Richtung (Z) bewegbar ist, wobei ferner die Positioniereinrichtung (30) einen sich in die zweite Richtung (R) erstreckenden Träger (32') aufweist, der durch ein erstes Antriebsmittel um die Hauptachse (16') der Halteeinrichtung (12) drehbar ist, dadurch gekennzeichnet, daß an dem Träger (32') durch ein zweites Antriebsmittel ein Ausleger (34) in der zweiten Richtung (R) verschiebbar ist, und daß an dem Ausleger (34) das Schweißelement (21) angeordnet ist, das durch ein drittes Antriebsmittel in der dritten Richtung (Z) verschiebbar ist, daß weiter das Schweißelement (21) um eine im wesentlichen zur dritten Bewegungsrichtung parallele Achse (Z') drehbar ist.

2. Vorrichtung zum Verschweißen nach Anspruch 1, dadurch gekennzeichnet, daß das Schweißelement (21) auf den Tool-Center-Point des Handhabungsgeräts (10) ausrichtbar ist.

3. Vorrichtung zum Verschweißen nach Anspruch 1 oder einem der folgenden, dadurch gekennzeichnet, daß daß die Halteeinrichtung (12) ein ein Greifelement (13) der Halteeinrichtung (12) verschiebendes Hubwerk (15) aufweist und daß das Hubwerk (15) ein Wegmeßsystem zur Erfassung der Hubbewegung des Greiferelements (13) aufweist.

4. Vorrichtung zum Verschweißen nach Anspruch 3, dadurch gekennzeichnet, daß durch das Hubwerk (15) eine definierte Prüfkraft auf das Anschweißteil (2) aufbringbar ist.

5. Vorrichtung zum Verschweißen nach einem der Ansprüche 1 bis 4, dadurch gekennzeichnet, daß die Vorrichtung (1) Mittel zur Registrierung eines mechanischen und/oder elektrischen Kontakts zwischen Anschweißteil (2) und Basisteil (3) aufweist.

6. Vorrichtung zum Verschweißen nach Anspruch 1, dadurch gekennzeichnet, daß die Positioniereinheiten (30-33) der Positioniereinrichtungen (30) der Schweißeinrichtung (20) CNC-steuerbar sind.

7. Verfahren zum Heftschweißen eines Anschweißteils (2) mit einem Basisteil (3), bei dem das Anschweißteil (2) durch eine von einem Werkzeugarm (11) eines Handhabungsgeräts (10) geführte Halteeinrichtung (12) gegriffen und an einer wählbaren Anschweißstelle des Basisteils (3) positioniert und dann heftverschweißt wird, wobei zum Heftverschweißen eine am Werkzeugarm (11) des Handhabungsgeräts (10) angeordnete Schweißeinrichtung (20) verwendet wird, deren Schweißelement (21) durch eine Positioniereinrichtung (30;31-33) in mindestens einer Richtung (R,θ,Z) relativ zum Anschweißteil (2) verstellt wird, wobei die Haltevorrichtung (12) das Anschweißteil (2) während des Heftschweißens hält und das Schweißelement (21) der Schweißeinrichtung (20) durch Positioniereinheiten (31-33) der Positioniereinrichtung (30) am Anschweißteil (2) geführt wird, dadurch gekennzeichnet, daß ohne Lageveränderung des Anschweißteils (2) dieses an mehreren Seiten heftverschweißt wird, indem die Positioniereinrichtung (30) um einen Winkel θ um die Achse des Anschweißteils (2) gedreht wird.

8. Verfahren zum Heftschweißen nach Anspruch 7, dadurch gekennzeichnet, daß nach dem Heftschweißen des Anschweißteils (2) mit dem Basisteil (3) die Halteeinrichtung (12) vom Anschweißteil (2) wegbewegt wird.

9. Verfahren zum Heftschweißen nach Anspruch 7 oder 8, dadurch gekennzeichnet, daß die Halteeinrichtung (12) vor dem Ausschweißen des Anschweißteils (2) in einer Greiferablage abgelegt wird.

10. Verfahren zum Heftschweißen nach einem der Ansprüche 7 bis 9, dadurch gekennzeichnet, daß nach dem Heftverschweißen das Anschweißteil (2) mit einer Zugkraft beaufschlagt wird.

11. Verfahren zum Heftschweißen nach einem der Ansprüche 7 bis 10, dadurch gekennzeichnet, daß das Schweißelement (21) der Schweißvorrichtung (20) zum Ausschweißen des Anschweißteils (2) auf dem Basisteil (3) auf einen Tool-Center-Punkt ausgerichtet wird, und daß die zum Ausschweißen des Anschweißteils (2) erforderliche Bewegung des Schweißelements (21) vom Handhabungsgerät (10) ausgeführt wird.

## Claims

1. A device for welding a weld-on part (2) to base part (3) Which device comprises a handling device (10) with a holding device (12) guided by a tool arm (11) of the handling device (10) for grasping and positioning the weld-on part (2) on a determinable weld-on position of the base part (3), which device (1) comprises a welding device (20) arranged on the tool arm (11) of the handling device (10), the welding element (21) of which wording device (20) can be adjusted by a positioning device (30; 31 - 33) in three directions (R, Θ, Z) relative to the holding device (12), wherein the welding element (21) of the welding device (20) can be moved by a first positioning unit (31) of the positioning device (30) in a first direction (Θ) running essentially concentrically to the main axis (16') of the holding device (12) and/or that the welding element (21) of the welding device (20) can be moved by a second positioning unit (32) of the positioning device (30) in a second direction (R) running essentially radially to the main axis (16') of the holding device (12) and/or that the welding element (21) of the welding device (20) can be moved by a, third positioning unit (33) of the positioning device (30) in a third direction (Z) running essentially orthogonally to the first (θ) and the second (R) directions, furthermore, that the positioning device (30) comprises a carrier (32') extending in the second direction (R) which can rotate by means of a first drive means about the main axis (16') of the holding device, characterized in that on which carrier (32') a crosspiece (34) can shift in the second direction (R) by means of a second drive means and that the welding element (21) is arranged on the crosspiece (34) which element can be shifted by a third drive means in the third direction (Z), furthermore that the welding element (21) can rotate about an axis (Z') parallel to the third direction of movement.

2. The welding device according to claim 1, characterized in that the welding element (21) can be aligned with the tool center point of the handling device (10)

3. The welding device according to claim 1 or one of the following, characterized in that the holding device (12) comprises a lifting mechanism (15) which shifts a grasping element (13) of the holding device (12) and that the lifting mechanism (15) comprises a path measuring system for detecting the lifting movement of the grasping element (13).

4. The welding device according to claim 3, characterized in that a defined testing force can be applied to the weld-on part (2) by the lifting mechanism (15).

5. The welding device according to one of claims 1 to 4, characterized in that the device (1) comprises means for registering a mechanical and/or electric contact between the weld-on part (2) and the base part (3).

6. The welding device according to Claim 1, characterized in that the positioning units (30 - 33) of the positioning devices (30) of the welding device (20) can be CNC-controlled.

7. A method of tack-welding a weld-on part (2) to a base part (3) in which the weld-on part (2) is grasped by a holding device (2) guided by a tool arm (11) of a handling device (10) and positioned on a determinable welding site of the base part (3) and then tack-welded, far which tack welding a welding device (20) arranged on the tool arm (11) of the handling device (10) is used the welding element (21) of which is adjusted by positioning device (30, 31 - 33) in at least one direction (R, θ, Z ) relative to the weld-on part (Z), wherein the holding device (12) holds the welding part (2) during the tack welding and the welding element (21) of the welding device (20) is guided by positioning units (31 - 33) of the positioning device (30) at the weld-on part (2), characterized in that without changing the position of the weld-on part (2) the weld-on part (2) is tack-welded on several sides by turning the positioning device (30) at an angle θ around the axis of the weld-on part (2).

8. The tack-welding method according to claim 7, characterized in that after the tack welding of the weld-on part (2) to the base part (3) the holding device (12) is moved away from the weld-on part (2).

9. The tack-welding method according to claim 7 or 8, characterized in that the holding device (13) is set down before the welding of the weld-on part (2) in a grasper repository.

10. The tack-welding method according to one of claims 7 to 9, characterized in that after the tack welding the weld-on part (2) is loaded with a tractive force.

11. The tack-welding method according to one of claims 7 to 10, characterized in that the welding element (21) of the welding device (20) is aligned on a tool center point for welding the weld-on part (2) to the base part (3) and that the movement of the welding element (21) necessary for welding the weld-on part (3) is executed by the handling device (10).

## Revendications

1. Dispositif pour souder une pièce à souder (2) sur une pièce de base (3), qui comprend un appareil de manipulation (10) qui comporte un dispositif de maintien (12) guidé par un bras d'outil (11) de l'appareil de manipulation (10) et qui est destiné à saisir et à positionner la pièce à souder (2) sur une position de soudage, pouvant être déterminée, de la pièce de base (3), dans lequel le dispositif (1) comprend un mécanisme de soudage (20) qui est disposé sur le bras d'outil (11) de l'appareil de manipulation (10) et dont l'élément de soudage (21) peut être déplacé selon trois directions (R, θ, Z) par rapport au dispositif de maintien (12) au moyen d'un dispositif de positionnement (30 ; 31-33), dans lequel l'élément de soudage (21) du mécanisme de soudage (20) peut être entraîné selon une première direction (θ) s'étendant de manière concentrique autour de l'axe principal (16') du dispositif de maintien (12) au moyen d'une première unité de positionnement (31) du dispositif de positionnement (30), et/ou l'élément de soudage (21) du mécanisme de soudage (20) peut être entraîné selon une deuxième direction (R) s'étendant essentiellement de manière radiale par rapport à l'axe principal (16') du dispositif de maintien (12) au moyen dune deuxième unité de positionnement (32) du dispositif de positionnement (30), et/ou l'élément de soudage (21) du mécanisme de soudage (20) peut être entraîné selon une troisième direction (Z) s'étendant essentiellement de manière orthogonale par rapport à la première direction (θ) et à la deuxième direction (R) au moyen d'une troisième unité de positionnement (33) du dispositif de positionnement (30), dans lequel, en outre, le dispositif de positionnement (30) comporte un support (32') qui s'étend selon la deuxième direction (R), qui peut être entraîné en rotation autour de l'axe principal (16') du dispositif de maintien (12) au moyen d'un premier organe d'entraînement, caractérisé en ce que, sur le support (32'), un bras console (34) peut être entraîné en translation selon la deuxième direction (R) au moyen d'un deuxième organe d'entraînement et en ce que l'élément de soudage (21), qui peut être entraîné en translation selon la troisième direction (Z) au moyen d'un troisième organe d'entraînement, est disposé sur le bras console (34), en ce que, en outre, l'élément de soudage (21) peut être entraîné en rotation autour d'un axe (Z') essentiellement parallèle à la troisième direction de déplacement.

2. Dispositif pour souder selon la revendication 1, caractérisé en ce que l'élément de soudage (21) peut être aligné avec le point central d'outil de l'appareil de manipulation (10).

3. Dispositif pour souder selon la revendication 1 ou une des suivantes, caractérisé en ce que le dispositif de maintien (12) comporte un dispositif de levage (15) déplaçant en translation un élément de saisie (13) du dispositif de maintien (12) et en ce que le dispositif de levage (15) comporte un système de mesure du déplacement destiné à la saisie du mouvement de levage de l'élément de saisie (13).

4. Dispositif pour souder selon la revendication 3, caractérisé en ce que, au moyen du dispositif de levage (15), on peut appliquer une force de test déterminée sur la pièce à souder (2).

5. Dispositif pour souder selon l'une quelconque des revendications 1 à 4, caractérisé en ce que le dispositif (1) comporte des moyens pour enregistrer un contact mécanique et/ou électrique entre la pièce à souder (2) et la pièce de base (3).

6. Dispositif pour souder selon la revendication 1, caractérisé en ce que les unités de positionnement (30-33) du dispositif de positionnement (30) du mécanisme de soudage (20) sont commandés par une commande numérique par calculateur (CNC).

7. Procédé pour la soudure de pointage d'une pièce à souder (2) sur une pièce de base (3), dans lequel la pièce à souder (2) est saisie par un dispositif de maintien (12) guidé par un bras d'outil (11) d'un appareil de manipulation (10), positionnée à une position de soudage sélectionnable à volonté de la pièce de base (3) et soumise ensuite à une soudure de pointage, dans lequel, pour l'opération de soudure de pointage, on utilise un mécanisme de soudage (20) qui est disposé sur le bras d'outil (11) de l'appareil de manipulation (10), et dont l'élément de soudage (21) peut être déplacé selon au moins une direction (R, θ, Z) par rapport à la pièce à souder (2) au moyen d'un dispositif de positionnement (30 ; 31-33), dans lequel le dispositif de maintien (12) maintient la pièce à souder (2) pendant l'opération de soudure de pointage et l'élément de soudage (21) du mécanisme de soudage (20) est guidé sur la pièce à souder (2) au moyen d'unités de positionnement (31-33) du dispositif de positionnement (30), caractérisé en ce que, sans modification de la position de la pièce à souder (2), celle-ci est soumise à une soudure de pointage sur plusieurs cotés par le fait que l'on fait tourner le dispositif de positionnement (30) d'un angle θ autour de l'axe de la pièce à souder (2).

8. Procédé pour la soudure de pointage selon la revendication 7, caractérisé en ce que, après la soudure de pointage de la pièce à souder (2) sur la pièce de base (3), on dégage le dispositif de maintien (12) de la pièce à souder (2).

9. Procédé pour la soudure de pointage selon la revendication 7 ou 8, caractérisé en ce que le dispositif de maintien (12) est déposé dans un réceptacle de grappin avant la soudure de la pièce à souder (2).

10. Procédé pour la soudure de pointage selon l'une quelconque des revendications 7 à 9, caractérisé en ce que, après l'opération de soudure de pointage, la pièce à souder (2) est soumise à une force de traction.

11. Procédé pour la soudure de pointage selon l'une quelconque des revendications 7 à 10, caractérisé en ce que l'élément de soudage (21) du mécanisme de soudage (20) est aligné avec un point central d'outil pour le soudage de la pièce à souder (2) sur la pièce de base (3) et en ce que le déplacement de l'élément de soudage (21), qui est nécessaire pour le soudage de la pièce à souder (2), est réalisé au moyen de l'appareil de manipulation (10).
